Europäisches Patentamt

European Patent Office

Office européen des brevets

(11) Veröffentlichungsnummer: **0 432 544 A2**

## (12) EUROPÄISCHE PATENTANMELDUNG

(21) Anmeldenummer: 90122390.9

(22) Anmeldetag: 23.11.90

(51) Int. Cl.5: **G02B 6/12**

(30) Priorität: 12.12.89 DE 3940988

(43) Veröffentlichungstag der Anmeldung:
**19.06.91 Patentblatt 91/25**

(84) Benannte Vertragsstaaten:
**AT BE CH DE ES FR GB IT LI NL SE**

(71) Anmelder: **Messerschmitt-Bölkow-Blohm GmbH**
**Robert-Koch-Strasse**
**W-8012 Ottobrunn(DE)**

(72) Erfinder: **Kaltschmidt, Horst, Prof. Dr.**
**Nibelungenstrasse 2**
**W-8014 Neubiberg(DE)**

(54) Optronischer Korrelator.

(57) Vorrichtung zum Erkennen von Informationen enthaltenden, über eine Strecke übertragener Nutzsignale aus verrauschten elektromagnetischen, insbesondere Lichtsignalen, nach Art einer angezapften Verzögerungsleitung (tapped delay line), wobei ein Wellenleiter in spiralförmigen Rillen Nuten eines Wafers auf mikrotechnischem Wege hergestellt ist, um so eine planare Lichtwellenleiterspule auf einem Chip zu bilden.

FIG.1

Si - WAFER

PLANARSPULE

EP 0 432 544 A2

## OPTRONISCHER KORRELATOR

Die Erfindung betrifft einen optronischen Korrelator, d.h. optisch/elektronischen Korrelator mit großen Zeitbandbreiteprodukt. Bei bisher bekannten Korrelatoren oder sogenannten Optimalfiltern oder SAW-Filtern (vgl. DE 32 48 539 C2) sind die Zeitbandbreiteprodukte relativ niedrig. Die Detektierbarkeit von Signalen im Rauschen ist durch den Quotienten aus Signalenergie (Leistung x Zeit) und spektraler Störleistungsdichte, die Extraktionsfähigkeit von Informationen, wie etwa Laufzeit, ist durch das Zeitbandbreiteprodukt eines Signals gegeben.

Aufgabe vorliegender Erfindung ist es, das Zeitbandbreiteprodukt von Korrelatoren oder Optimalfiltern erheblich zu verbessern.

Gelöst wird diese Aufgabe durch die beanspruchten Verfahrens- und Vorrichtungsmerkmale. Aus- und Weiterbildungen sind in weiteren Ansprüchen beschrieben.

Der wesentlichste Vorteil ist eine Steigerung des Zeitbandbreiteproduktes um mindestens eine Größenordnung und entsprechend gesteigerter Signaldetektierbarkeit trotz stark verrauschter Signale. Diese Vorteile gelten sowohl gegenüber SAW-Filtern, z.B. ist ein solcher Filter in der DE 32 48 539 C2 beschrieben, als auch gegenüber einer "Tapped Delay Line" (eine solche ist z.B. in der EP 0 106 505 A2 beschrieben). Die elektronische Auswertung für die bevorzugte Anwendung der Erfindung (Binärkorrelator) kann in der Art ausgeführt werden, wie in der Deutschen Patentschrift 38 16 845 C2 beschrieben. Abwandlungen hiervon können selbstverständlich vorgenommen werden, ohne hierdurch den Schutzumfang zu verlassen, wie er durch die Ansprüche gekennzeichnet ist.

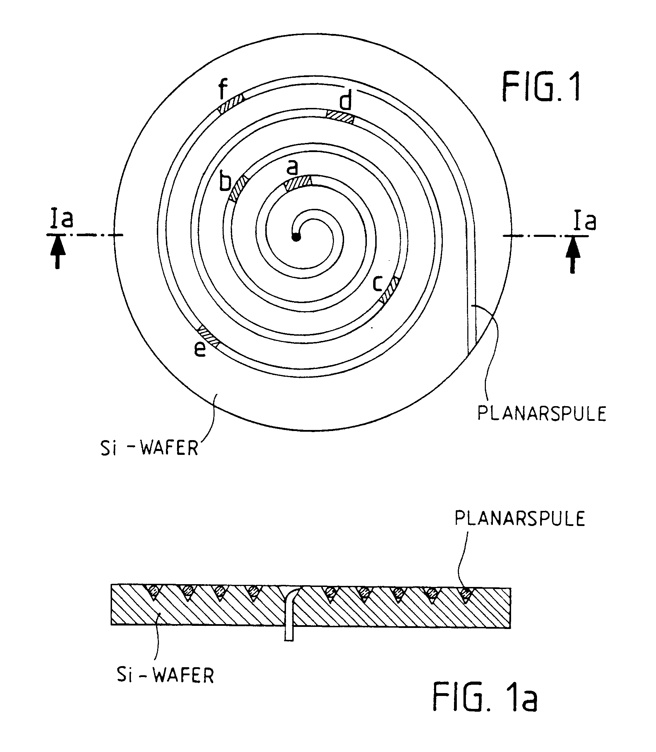

Erfindungsgemäß wird vorgeschlagen, das zu korrelierende/optimal zu filternde Signal auf ein Lichtsignal gleicher zeitlicher Länge (beispielsweise durch Amplitudenmodulation) aufzumodulieren. So kann nach dem Vorbild des "Tapped Delay Line"-Filters ein optronisch wirksames Optimal-filter mit sehr großem Zeitbandbreiteprodukt hergestellt werden. Das so modulierte Lichtsignal wird in einen Lichtwellenleiter eingespeist. Der Lichtwellenleiter (LWL) ist mit Rücksicht auf seine beträchtliche Länge bei geforderter geringer Dämpfung als Glasfaser ausgebildet (die Glassorte wird unter dem Gesichtspunkt möglichst geringer Dämpfung ausgewählt). Diese (Monomode-) Glasfaser wird beispielsweise in vorteilhaft spiralig ausgeätzten Rillen/V-Nuten (siehe Fig. 1a) des Siliziumwafers eingedrückt, um eine planare Spule als Verzögerungsleitung auf einem Chip zu bilden. Diese planare Lichtwellenleiterspule in Spiralform wird nun an diskreten Stellen des Lichtwellenleiters so bearbeitet (angeschliffen, angeätzt), daß an diesen angezapften Stellen Licht austritt. Das aus den dadurch geschaffenen Austrittsfenstern austretende Licht kann nun mit einer Linsenanordnung oder ähnlicher Optik gesammelt und auf einer einzigen PIN-Diode als Photoempfänger konzentriert werden; zur Sammlung und Bildung des Korrelations- bzw. Konvolutionsintegrals.

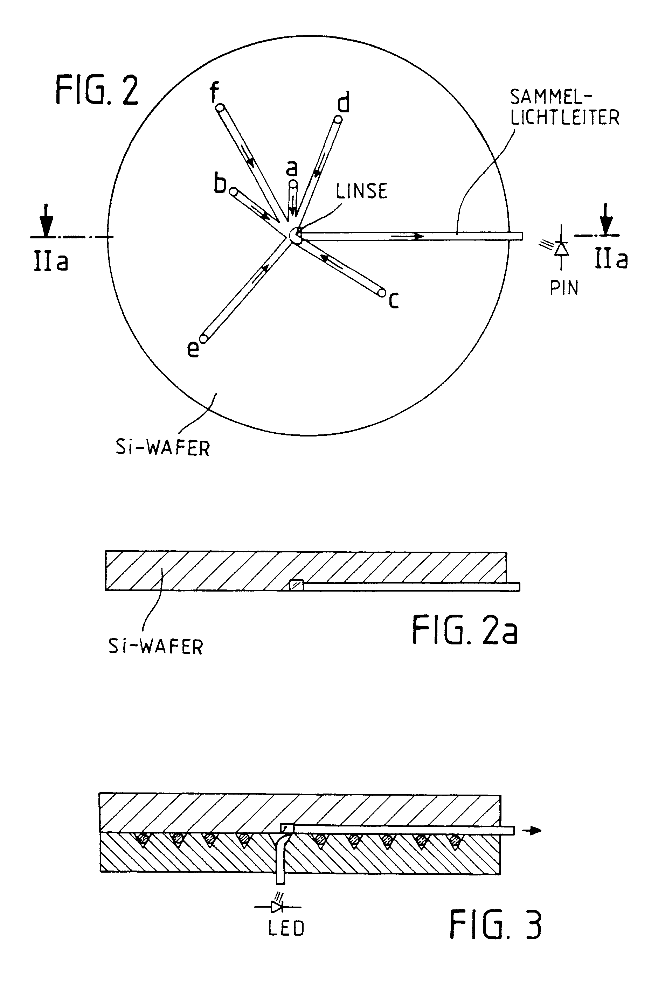

Erfindungsgemäß wird hierzu vorgeschlagen, an den Austrittsfenstern für das Licht eine Lichtwellenleiterspirale, die von einem Zentrum in Fig. 1 und Fig. 1a ausgeht und als Verzögerungsleitung für Licht von einer gepulsten Lichtquelle (LED) dient, gemäß Fig. 1, Anzapfungen a bis f anzubringen, wobei diese Sammellichtwellenleiter von a bis f wegen ihrer Kürze als radiale Strahlen, die zum Zentrum führen, aus optischem Leitermaterial, wie Lithium-Niobat (LiNbO$_3$) im Strahlen-/Streifenmuster in Dünnschichttechnik hergestellt werden, wobei das Strahlenmuster mit Hilfe von Maskentechnik oder auf lithogrphischem Wege erzeugt wird. Die Sammellichtwellenleiter, die (siehe Fig. 2 und Fig. 2a) von den Fenstern a bis f zum Zentrum führen, sind auf einem eigenen Siliziumwafer angeordnet (siehe Fig. 2a). Im Zentrum ist bevorzugt auch die Sammellinse angeordnet, die mit einem Sammellichtwellenleiter zum Sammelpunkt S und von dort zum Photoempfänger (PIN-Diode) führt.

Der Träger für die als Verzögerungsleitung dienende planare Lichtwellenleiterspule (Fig. 1a) dient als Unterteil und der Träger für die strahlenförmigen Sammellichtwellenleiter (Fig. 2a) dient als Oberteil einer zu schaffenden Einheit, die zusammengefügt/gebondet wird, insbesondere am Umfang der beiden Siliziumwafer. Dabei wird der Lichtwellenleiter in Form der planaren spiraligen Spule in einer entsprechend in Mikrotechnik hergestellten Spirale des Unterteils (Fig. 1a) eingeklemmt. Für die Fixierung dieses spiraligen Lichtwellenleiters ist deshalb kein Haftvermittler (Klebstoff) erfoderlich.

Erfindungsgemäß sind die Sammellichtwellenleiter, insbesondere in Form kurzer Stäbe, als Strahlen, insbesondere in Streifenform aus optischem leitendem Material, wie Lithium-Niobat in Dünnschichttechnik/Maskentechnik im Vakuum aufgedampft (PVD- oder CVD-Verfahren). Hierbei wird man möglichst dünne Lichtwellenleiter verwenden und möglichst dünne Stege zwischen den V-Nuten in dem Siliziumwafer (Fig. 1a) stehenlassen, um so eine möglichst große Länge eines Lichtwellenleiters auf kleinem Raum planar zu realisieren. Hierzu dient vor allem die Spiralform, die besonders gut in Mikrotechnik, insbesondere Mikrosystemtechnik aus einem Siliziumwafer o.ä. Material in Kreisscheibenform, wie in der Halbleitertechnik üblich, herstellbar ist.

Wird Licht durch die Spirale geschickt, so wird ersichtlich, daß die Korrelationsspitze (peak) dann auftritt, wenn auf dem spiraligen Lichtwellenleiter alle Hellabschnitte von Lichtsignalen mit Hell/Dunkelabschnitten, die durch den Lichtwellenleiter geschickt werden, an den Anzapfungsstellen (a bis f) liegen. In diesem Moment ist ein Maximum, d.h. die höchste Lichtintensität, vorhanden und am Sammelpunkt S mit Hilfe des Photoempfängers (PIN-Diode) erkennbar. Dabei wird an dem photoelektrischen Detektor (PIN-Diode) momentan ein Intensitätsmaximum der optischen Impulse erfaßt und es bilden sich entsprechend elektrische Signale aus, entweder analoge oder nach Umwandlung in einem A/D-Wandler digitale Signale (Bits) zur Informationsweiterverarbeitung/Processing und Auswertung.

Hierzu bietet sich eine Verarbeitung binärer Signale nach DE 38 16 845 C2 an, wobei die schnelle Änderung vom 0-Zustand in den 1-Zustand größer als eine Mikrosekunde, jedoch kleiner als eine Millisekunde angestrebt wird. Dabei können die gewandelten/demodulierten Meßsignale mit Referenzsignalen zur Auswertung verglichen werden, in an sich bekannter Weise mit Hilfe einer Elektronik.

Die Erfindung ist nicht auf die o.a. Ausführungsbeispiele beschränkt.

Die Anwendung der Erfindung liegt vor allem in der Nachrichtentechnik, zum einen für Signalübertragung über eine bestimmte Strecke auf elektromagnetischem, insbesondere optischem Wege, aber auch in der Meßtechnik, Analysentechnik und anderen Anwendungen.

Es kann im Rahmen der Erfindung bei Signaldauern von größer als eine Mikrosekunde, kleiner als eine Millisekunde ausgeführter Echtzeitverarbeitung von Signalen hoher Bandbreite bis in den Gigahertzbereich hinein, eine hohe Zeitstandbreite erzielt werden. Zeitbandbreite (time band wide) ist das Produkt einer Zeit multipliziert mit einer Frequenz, z.B. Millisekunde · 1 : Millisekunde zu verstehen, daß bei der Erfindung in der Größenordnung von 1000 und mehr liegt (dimensionslose Zahl als Güteziffer). Bei Abwandlungen dürfen jedoch nicht die durch die erfindungsgemäße Lichtsammelanordnung kürzesten Verbindungen von Anzapfstellen zum Zentrum einer Spirale gefährdet werden, d.h. die Ziele der Erfindung, wie kurze Wege, geringe Dämpfung der Lichtwellenleiter (LWL) und hohe Extraktionsfähigkeit modulierter/kodierter Information.

Abwandlungen können hinsichtlich des Wafermaterials vorgenommen werden, jedoch wurde Silizium (Si) wegen der guten chemischen Ätzbarkeit (anisotrop) eines kristallinen Materials gewählt.

Auch andere aus der Mikrosystemtechnik, Mikromechanik, Mikroelektronik, Optoelektronik bekannte Materialien und Herstellverfahren, einschließlich derjeniger für Lichtwellenleiter (in Dünnschichttechnik) und deren Integration einschließlich Optik und Elektronik auf einem Chip sind hier anwendbar.

Da die Auswerteelektronik nur die bekannten Schaltungsteile wie Demudolatoren A/D- und/oder D/A-Wandler und Komperatoren (für Vergleich mit einer Referenz) enthält, ist sie der Einfachheit wegen nicht dargestellt.

## Ansprüche

1. Vorrichtung zum Erkennen von Informationen enthaltenden, über eine Strecke übertragener Nutzsignale aus verrauschten elektromagnetischen, insbesondere Lichtsignalen, nach Art einer angezapften Verzögerungsleitung (tapped delay line), **dadurch gekennzeichnet,** daß ein Wellenleiter in spiralförmigen Rillen/Nuten eines Wafers auf mikrotechnischem Wege hergestellt ist, um so eine planare Lichtwellenleiterspule auf einem Chip zu bilden.

2. Vorrichtung nach Anspruch 1, **dadurch gekennzeichnet,** daß Glasfasern in spiralig ausgeätzten Rillen/Nuten eines Siliziumwafers eigeklemmt/eingedrückt sind.

3. Vorrichtung nach Anspruch 1, **dadurch gekennzeichnet,** daß der Lichtwellenleiter (LWL) an diskreten Stellen so bearbeitet, insbesondere mechanisch (angeschliffen) oder chemisch (angeätzt) angezapft ist, daß an diesen Stellen/Fenstern Licht austritt.

4. Vorrichtung nach Anspruch 3, **dadurch gekennzeichnet,** daß das an diskreten Stellen aus den Fenstern austretende Licht gesammelt und auf einen einzigen Photoempfänger (PIN-Diode) konzentriert wird.

5. Vorrichtung nach Anspruch 4, **dadurch gekennzeichnet,** daß das Sammeln mittels Lichtwellenleitern erfolgt, die von den Fenstern das Licht anzapfen und zu den Photoempfängern (PIN-Dioden) hinleiten.

6. Vorrichtung nach Anspruch 5, **dadurch gekennzeichnet,** daß die Lichtwellenleiter zur Sammlung des Lichtes auf einem eigenen Träger (Siliziumwafer) angeordnet sind, insbesondere als kürzeste Verbindung (Strahlen) von den Anzapfungen zum Zentrum (C) oder Sammelpunkt (S).

7. Vorrichtung nach Anspruch 5 oder 6, **dadurch gekennzeichnet,** daß die Lichtwellenleiter zum Sammeln von im Vakuum aufgedampften Streifen aus dünnen Schichten optischer Leiter, wie aus Lithium-Niobat ($LiNbO_3$) gebildet sind.

8. Vorrichtung nach Anspruch 5, 6 oder 7, **dadurch gekennzeichnet,** daß ein erster Träger für den Lichtwellenleiter als spiralige Verzögerungsleitung und ein zweiter Träger für die Lichtwellenleiter für das Sammeln von aus Anzapfungen/Fenstern austretendem Licht zu einer Einheit zusammengefügt sind (Fig. 3).

9. Vorrichtung nach Anspruch 8, **dadurch gekennzeichnet,** daß bei dem Zusammenfügen/Bonden der beiden Träger/Wafer der Lichtwellenleiter für die Verzögerungsleitung in eingeätzte Spiralen eines Siliziumwafers eingeklemmt bzw. eingedrückt wird und der erste Träger für den Lichtwellenleiter in Spiralform als Verzögerungsleitung ein Unterteil (Basis) bildet, auf das ein zweiter Träger für die Lichtwellenleiter zum Sammeln des an den Anzapfungen/Fenstern austretenden Lichtes, der ein(en) Oberteil (Deckel) bildet, aufgesetzt wird.

10. Verfahren zum Erkennen von Informationen enthaltenden, über eine Strecke übertragener Nutzsignale aus verrauschten elektromagnetischen, insbesondere Lichtsignalen, nach Art einer angezapften Verzögerungsleitung (tapped delay line), mit Hilfe einer elektronischen Signalverarbeitung in Echtzeit, **dadurch gekennzeichnet,** daß die zu erkennenden Nutzsignale/Informationen, in schneller Änderung aufmoduliert auf Lichtsignale vorgegebener Dauer, in einen Wellenleiter in Form einer in Mikrotechnik hergestellten Planarspule eingespeist werden und nach Sammlung, Demodulation und Vergleich mit Referenzen, binär elektronisch verarbeitet/ausgewertet werden.

FIG.1

f

d

b

a

Ia - - - Ia

c

e

PLANARSPULE

Si - WAFER

PLANARSPULE

Si - WAFER

FIG. 1a

FIG. 2

f

d

a

b

LINSE

SAMMEL-
LICHTLEITER

IIa

IIa

PIN

c

e

Si-WAFER

Si-WAFER

FIG. 2a

LED

FIG. 3